# EUROPÄISCHE PATENTSCHRIFT

(11) **EP 2 426 420 B1**
(45) Veröffentlichungstag und Bekanntmachung des Hinweises auf die Patenterteilung: **04.04.2018**
(21) Anmeldenummer: 11007262.6
(22) Anmeldetag: 07.09.2011
(51) Int. Cl.: F24D 3/08, F24D 10/00, F24D 11/00, F24D 17/00, F24D 19/10

(54) **Warmwasserbereitungsanlage und Verfahren zum Betreiben einer Warmwasserbereitungsanlage**
Hot water preparation assembly and method for operating same
Installation de préparation d'eau chaude et procédé de fonctionnement d'une installation de préparation d'eau chaude

(30) Priorität: 07.09.2010 DE 102010044535
(43) Veröffentlichungstag der Anmeldung: 07.03.2012
(73) Patentinhaber: Richter Pumpentechnik GmbH, 85737 Ismaning (DE)
(72) Erfinder: Richter, Matthias, 85375 Neufahrn (DE)
(74) Vertreter: Prinz & Partner mbB

(56) Entgegenhaltungen:
- EP-A2- 0 120 493
- AT-B- 401 576
- DE-A1- 19 508 061

## Beschreibung

Die Erfindung betrifft eine Warmwasserbereitungsanlage mit einem primären Heizwasserkreislauf und einem sekundären Trinkwasserkreislauf sowie ein Verfahren zum Betreiben einer Warmwasserbereitungsanlage.

Eine Warmwasserbereitungsanlage, bei der ein primärer Fernwärmekreislauf und ein sekundärer Trinkwasserkreislauf über zwei Wärmeaustauscher gekoppelt sind und ein Warmwasser-Zirkulationskreislauf im Trinkwasserkreislauf vorgesehen ist, in dem eine Pumpe warmes Trinkwasser durch den ersten Wärmetauscher in einen in den Zirkulationskreislauf integrierten Warmwasserspeicher pumpt, ist aus der DE 44 04 856 A1 und der DE 195 08 061 A1 bekannt. Wenn der Warmwasserspeicher entladen ist, wird eine zweite Pumpe aktiviert, die kaltes Trinkwasser durch den ersten und zweiten Wärmetauscher in den Wärmespeicher pumpt. Sobald der Wärmespeicher geladen ist, kann das Laden des Wärmespeichers beendet werden.

Die nach dem ersten Wärmetauscher im Fernwärmekreislauf verbleibende Wärmeenergie wird nur beim Laden des Wärmespeichers genutzt. Ist der Warmwasserspeicher jedoch zumindest teilweise geladen, so muss der erste Wärmetauscher aufgrund der Zirkulation im Warmwasser-Zirkulationskreislauf weiterhin betrieben werden, und die Wärmeenergie im Fernwärmekreislauf wird nur geringfügig genutzt. Ein weiteres Problem der oben beschriebenen Anlage besteht darin, dass der Warmwasserspeicher direkt in den Warmwasser-Zirkulationskreislauf integriert ist und somit kontinuierlich dem Warmwasserspeicher Warmwasser zugeführt und entnommen wird, wodurch es zu Strömungen im Warmwasserspeicher kommt und eine Vermischung des Warmwassers mit kühlerem Wasser möglich ist. Bei einer Absenkung der Temperatur des Trinkwassers im Warmwasser-Zirkulationskreislauf kann es zum Wachstum von Legionellen kommen.

Eine komplexe Warmwasserbereitungsanlage ist aus der DE 195 04 730 C1 bekannt mit einem Warmwasser-Zirkulationskreislauf, wobei in einem Nebenarm des Warmwasser-Zirkulationskreislaufs eine eigene Ladepumpe zum Laden eines Warmwasserspeichers vorgesehen ist.

Aus der den nächstkommenden Stand der Technik bildenden EP 0 120 493 A2 ist eine Warmwasserbereitungsanlage bekannt, bei der gemäß einer Ausführungsform ein Warmwasserspeicher in zwei übereinander angeordnete, stets miteinander verbundene Abschnitte aufgeteilt ist, wobei jeder Abschnitt mit einem eigenen Wärmetauscher mit einem Heizwasserkreislauf gekoppelt ist. Die beiden Speicherladesysteme für die beiden Abschnitte des Warmwasserspeichers werden nur dann in Betrieb genommen, wenn die entsprechende Temperatur im Warmwasserspeicher unterhalb einer vorgegebenen Grenztemperatur liegt. Der Heizwasserkreislauf wird separat hiervon geregelt. Er wird nur dann durchströmt, wenn rücklaufseitig eine vorgegebene Maximaltemperatur unterschritten wird. Damit soll über den einzuschränkenden Massenstrom im Heizwasserkreislauf dessen Rücklauftemperatur auf niedrige Werte abgeregelt werden.

Aufgabe der Erfindung ist es, eine Warmwasserbereitungsanlage zu schaffen, die sowohl effektiv das Wachstum von Legionellen verhindert als auch eine gute Ausnutzung der Wärmeenergie des Heizwassers ermöglicht.

Diese Aufgabe wird durch eine erfindungsgemäße Warmwasserbereitungsanlage mit den Merkmalen von Anspruch 1 gelöst. Die Warmwasserbereitungsanlage umfasst einen primären Heizwasserkreislauf und einen sekundären Trinkwasserkreislauf. Der Trinkwasserkreislauf ist über ein Wärmetauschersystem mit dem Heizwasserkreislauf gekoppelt und umfasst einen Warmwasser-Zirkulationskreislauf, einen außerhalb des Warmwasser-Zirkulationskreislaufs angeordneten und mit dem Warmwasser-Zirkulationskreislauf gekoppelten Warmwasserspeicher und ein mit dem Wärmetauschersystem verbundenes Speicherladesystem. Das Wärmetauschersystem weist einen ersten Wärmetauscher, welcher einen Wärmeaustausch zwischen dem primären Heizwasserkreislauf und dem Warmwasser-Zirkulationskreislauf des Trinkwasserkreislauf ermöglicht, und einen zweiten Wärmetauscher auf, welcher im Heizwasserkreislauf im Rücklauf des ersten Wärmetauschers und im Speicherladesystem des Trinkwasserkreislaufs im Verlauf des ersten Wärmetauschers angeordnet ist und einen Wärmeaustausch zwischen dem primären Heizwasserkreislauf und einer Ladezuleitung des Warmwasser-Zirkulationskreislaufs des Trinkwasserkreislaufs ermöglicht. Eine Steuereinheit, genauer eine Steuer- und Regeleinheit, ist vorgesehen, die im Heizwasserkreislauf einen Heizwassertemperatursensor im Rücklauf des zweiten Wärmetauschers und eine Massenstromsteuerungseinheit im Speicherladesystem umfasst, welche eine Regelung der Heizwasserrücklauftemperatur im Rücklauf des zweiten Wärmetauschers durch Steuerung des Massenstroms von Trinkwasser durch den zweiten Wärmetauscher im Trinkwasserkreislauf ermöglicht.

Die Erfindung bezieht sich insbesondere auf einen durch ein Nah- oder Fernwärmesystem gebildeten Heizwasserkreislauf, bei dem es auf eine möglichst geringe Rücklauftemperatur ankommt, um die Verluste in der Rückführleitung verringern lassen.

Ferner bezieht sich die Erfindung auf ein Brennwertsystem, bei dem sich der Brennwertnutzen durch niedrige Rücklauftemperaturen erhöhen lässt.

Da der Warmwasserspeicher nicht in den Warmwasser-Zirkulationskreislauf integriert ist, findet bei der Zirkulation des Trinkwassers im Warmwasser-Zirkulationskreislauf keine Durchströmung des Warmwasserspeichers statt. Auf diese Weise ist der Schutz vor Legionellen im Warmwasser-Zirkulationskreislauf verbessert. Indem die Massenstromsteuerungseinheit in Abhängigkeit von der Heizwasserrücklauftemperatur gesteuert wird, ist es möglich, die Heizwasserrücklauftemperatur zu senken und die im Heizwasser gespeicherte Energie besser zu nutzen. Diese Senkung der Rücklauftemperatur ist insbesondere bei Fernwärmenutzung oder der Brennwerttechnik sehr vorteilhaft.

Beispielsweise ist die Massenstromsteuerungseinheit im Speicherladesystem ein Stromregelventil. Auf diese Weise lassen sich auch sehr geringe Massenströme durch das Speicherladesystem einstellen. Ferner ist ein solches Ventil einfach und genau anzusteuern und kostengünstig.

Um die Heizwassertemperatur im Wärmetauschersystem zu senken und somit die Kalkbildung im Wärmetauschersystem zu reduzieren, kann im Heizwasserkreislauf eine Mischeinheit vorgesehen sein, welche mit einem ersten Eingang mit einem Heizwasserzulauf, mit einem zweiten Eingang mit dem Rücklauf des ersten Wärmetauschers und mit einem Ausgang mit dem Vorlauf des ersten Wärmetauschers verbunden ist.

Vorzugsweise ist eine Warmwassersteuereinheit mit einem Warmwassertemperatursensor vorgesehen, welche eine Regelung der Trinkwassertemperatur im Warmwasser-Zirkulationskreislauf nach dem Wärmetauschersystem durch Steuerung der Mischeinheit im Heizwasserkreislauf ermöglicht. Dies sorgt für eine präzise Einstellung der Temperatur im Warmwasser-Zirkulationskreislauf. Somit wird sowohl eine Gefahr der Bildung von Legionellen bei zu niedriger Temperatur als auch erhöhte Kalkablagerungen und eine erhöhte Verbrühungsgefahr bei zu hohen Temperaturen vermieden.

Es kann eine Speicherladepumpe, vorzugsweise eine Hocheffizienzpumpe, im Speicherladesystem vorgesehen sein.

Um einen Ladezustand des Warmwasserspeichers ermitteln zu können, ist vorzugsweise zumindest ein Speichersensor am Warmwasserspeicher vorgesehen, der eine Temperatur des Wassers im Warmwasserspeicher erfasst.

Für eine Ausführungsform mit geringem Bauraumbedarf können der erste und der zweite Wärmetauscher in einem gemeinsamen Wärmetauscher integriert sein, was bauliche und Kostenvorteile mit sich bringt.

Ferner wird die Aufgabe durch ein erfindungsgemäßes Verfahren zum Betreiben einer Warmwasserbereitungsanlage mit den Merkmalen von Anspruch 8 gelöst. Die Warmwasserbereitungsanlage umfasst einen primären Heizwasserkreislauf und einen sekundären Trinkwasserkreislauf, wobei der Trinkwasserkreislauf über ein Wärmetauschersystem mit dem Heizwasserkreislauf gekoppelt ist und einen Warmwasser-Zirkulationskreislauf, einen außerhalb des Warmwasser-Zirkulationskreislaufs angeordneten und mit dem Warmwasser-Zirkulationskreislauf gekoppelten Warmwasserspeicher und ein mit dem Wärmetauschersystem verbundenes Speicherladesystem umfasst.

Ein Betriebsmodus ist vorgesehen mit den Verfahrensschritten:
Pumpen des erwärmten Trinkwassers im Warmwasser-Zirkulationskreislauf durch das Wärmetauschersystem,
Regeln einer Trinkwassertemperatur im Warmwasser-Zirkulationskreislauf nach Durchfluss des Wärmetauschersystems auf einen Trinkwassertemperatursollwert durch Steuerung des Heizwasserzuflusses des Wärmetauschersystems, und
Regeln einer Heizwasserrückflusstemperatur des Heizwassers nach Durchfluss des Wärmetauschersystems auf einen Heizwasserrückflusstemperatursollwert durch Steuerung des Massenstroms von Trinkwasser durch das Speicherladesystem.

Dadurch, dass einerseits die Trinkwassertemperatur und andererseits die Heizwasserrückflusstemperatur geregelt wird, wird eine genaue Einstellung der Trinkwassertemperatur und eine gute Ausnutzung der im Heizwasser gespeicherten Energie ermöglicht.

Der Heizwasserzufluss des Wärmetauschersystems kann über die Temperatur und/oder den Massenstrom des Heizwassers gesteuert werden.

Um ferner das Wachstum von Legionellen im Trinkwasser zu verhindern, beträgt der Trinkwassertemperatursollwert im Warmwasser-Zirkulationskreislauf nach Durchfluss des Wärmetauschersystems beispielsweise mindestens 60 °C, vorzugsweise zwischen 60 °C und 65 °C.

Um eine gute Ausnutzung der Energie des Heizwassers zu gewährleisten, beträgt der Heizwasserrückflusstemperatursollwert vorzugsweise höchstens 50 °C.

Vorzugsweise ist ein Normalbetrieb vorgesehen, bei dem der Warmwasserspeicher kontinuierlich mit einem Massenstrom von Trinkwasser durch das Speicherladesystem geladen wird. Auf diese Weise kann beim Erwärmen des Trinkwassers die Temperatur des Heizwassers durch Wärmeaustausch kontinuierlich verringert werden.

Es kann ein Volllastbetrieb vorgesehen sein, bei dem der Warmwasserspeicher mit einem maximalen Massenstrom von Trinkwasser durch das Speicherladesystem geladen wird. Dies ermöglicht ein schnelles Laden des Warmwasserspeichers.

Der Heizwasserrückflusstemperatursollwert kann in Abhängigkeit von der Temperatur des Wassers im Warmwasserspeicher und/oder des Ladezustands des Warmwasserspeichers ausgewählt werden.

Bei vollständig geladenem Warmwasserspeicher wird der Massenstrom des Trinkwassers durch das Speicherladesystem weiter verringert oder gestoppt werden.

In einem vorgegebenen Zeitintervall kann zum Schutz vor Legionellenwachstum der Warmwasserspeicher vollständig aufgeladen werden. Dies geschieht beispielsweise durch ein Erhöhen des Massenstromes des Trinkwassers durch das Speicherladesystem. Um dies zu erreichen, kann beispielsweise der Heizwasserrückflusstemperatursollwert abgesenkt werden.

Das Pumpen des erwärmten Trinkwassers im Warmwasser-Zirkulationskreislauf durch das Wärmetauschersystem kann im Dauerbetrieb oder intervallartig erfolgen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine erfindungsgemäße Warmwasserbereitungsanlage;
- Figur 2 die Warmwasserbereitungsanlage gemäß Figur 1 mit hervorgehobenem Warmwasser-Zirkulationskreislauf;
- Figur 3 die Warmwasserbereitungsanlage gemäß Figur 1 mit hervorgehobenem Speicherladesystem; und
- Figur 4 eine zweite Ausführungsform einer erfindungsgemäßen Warmwasserbereitungsanlage.

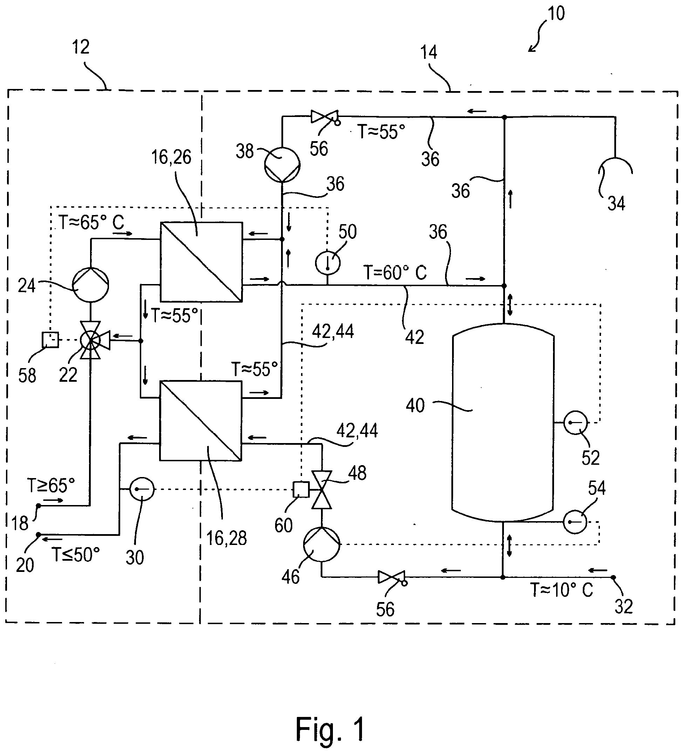

Figur 1 zeigt eine Warmwasserbereitungsanlage 10 mit einem primären Heizwasserkreislauf 12 und einem sekundären Trinkwasserkreislauf 14. Der Heizwasserkreislauf 12 und der Trinkwasserkreislauf 14 sind über ein Wärmetauschersystem 16 miteinander gekoppelt. Die Strömungsrichtung des Heizwassers und des Trinkwassers im Heizwasserkreislauf bzw. im Trinkwasserkreislauf 14 ist durch entsprechende Pfeile gekennzeichnet.

Der Heizwasserkreislauf 12 weist einen Heizwasserzulauf 18 und einen Heizwasserablauf 20 auf, die in der gezeigten Ausführungsform mit einem Fernwärmenetz verbunden sind. Das Heizwasser am Heizwasserzulauf 18 hat eine Temperatur von mindestens 65 °C, in der gezeigten Ausführungsform hat das Fernwärmenetz eine Vorlauftemperatur zwischen 80 °C und 130 °C.

Der Heizwasserkreislauf 12 umfasst ferner eine Mischeinheit 22 und eine Wärmetauscherladepumpe 24, über welche der Heizwasserzulauf 18 mit dem Wärmetauschersystem 16 verbunden ist. Das Wärmetauschersystem 16 umfasst einen ersten Wärmetauscher 26 und einen zweiten Wärmetauscher 28, die im Heizwasserkreislauf 12 in Reihe angeordnet sind. Der Vorlauf des zweiten Wärmetauschers 28 ist mit dem Rücklauf des ersten Wärmetauschers 26 verbunden.

Die Mischeinheit 22 hat einen ersten Eingang, der mit dem Heizwasserzulauf 18 verbunden ist, einen zweiten Eingang, der mit dem Rücklauf des ersten Wärmetauschers 26 verbunden ist, und einen Ausgang, der mit dem Vorlauf des ersten Wärmetauschers 26 verbunden ist. Die Mischeinheit 22 ermöglicht eine Mischung des heißen Heizwassers des Heizwasserzulaufs 18 mit dem abgekühlten Heizwasser des Rücklaufs des ersten Wärmetauschers 26. Auf diese Weise kann die Temperatur des Heizwassers, welches durch den ersten Wärmetauscher 26 fließt, gegenüber der Temperatur des Heizwassers am Heizwasserzulauf 18 reduziert werden, wodurch insbesondere die Kalkbildung im ersten Wärmetauscher 26 reduziert wird.

Im Rücklauf des zweiten Wärmetauschers 28 ist ein Heizwassertemperatursensor 30 vorgesehen, welcher die Temperatur des Heizwassers nach dem Wärmetauschersystem 16 erfasst.

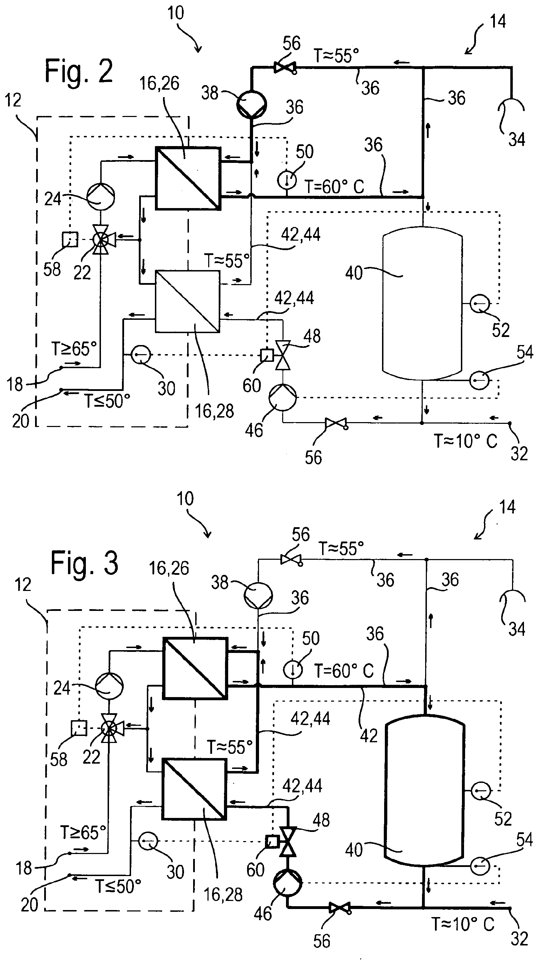

Der Trinkwasserkreislauf 14 weist einen Trinkwasserzulauf 32 und eine Trinkwasserzapfstelle 34 auf. Die Temperatur des Trinkwassers am Trinkwasserzulauf ist beispielsweise 10 °C. Die Trinkwasserzapfstelle 34 ist an einem Warmwasser-Zirkulationskreislauf 36 vorgesehen, welcher in Figur 2 mit dicken Linien hervorgehoben ist. Der Warmwasser-Zirkulationskreislauf 36 hat eine Zirkulationspumpe 38, welche das erwärmte Trinkwasser durch den ersten Wärmetauscher 26 und den Warmwasser-Zirkulationskreislauf 36 pumpt.

Ein Warmwasserspeicher 40 ist außerhalb des Warmwasser-Zirkulationskreislaufs 36 angeordnet und ist einerseits auf seiner Oberseite mit dem Warmwasser-Zirkulationskreislauf 36 und andererseits auf seiner Unterseite mit dem Trinkwasserzulauf 32 verbunden.

Der Warmwasser-Zirkulationskreislauf 36 kann in einen Zulaufabschnitt und einen Rücklaufabschnitt eingeteilt werden, wobei der Zulaufabschnitt sich vom ersten Wärmetauscher 26 in Zirkulationsrichtung, in der gezeigten Ausführungsform entgegen des Uhrzeigersinns, bis zur Anschlussstelle des Warmwasserspeichers 40 oder der Trinkwasserzapfstelle 34 erstreckt und der Rücklaufabschnitt vom Anschluss der Trinkwasserzapfstelle 34 in Zirkulationsrichtung bis zum ersten Wärmetauscher 26 erstreckt.

Im Zulaufabschnitt des Warmwasser-Zirkulationskreislaufs 36, nach dem ersten Wärmetauscher 26, ist ein Warmwassertemperatursensor 50 vorgesehen, welcher die Temperatur des Trinkwassers im Zulaufabschnitt des Warmwasser-Zirkulationskreislaufs 36 erfasst.

Zum Laden des Warmwasserspeichers 40 ist ein Speicherladesystem 42 vorgesehen, welches in Figur 3 mit dicken Linien hervorgehoben ist. Das Speicherladesystem 42 weist eine Ladezuleitung 44 auf, die in den Warmwasser-Zirkulationskreislauf 36 mündet und entlang der eine Speicherladepumpe 46 und eine Massenstromsteuerungseinheit 48 sowie der zweite Wärmetauscher 28 angeordnet sind. Eine Steuereinheit 60 ist vorgesehen, welche mit der Massenstromsteuerungseinheit 48 und dem Heizwassertemperatursensor 30 verbunden ist und die Massenstromsteuerungseinheit 48 in Abhängigkeit von der Heizwasserrückflusstemperatur ansteuert. Die Steuereinheit 60 ist genauer gesagt eine Regelung, die aber auch in einigen Betriebszuständen nur Steuerungsfunktionen übernimmt.

Die Massenstromsteuerungseinheit 48 ist als Stromregelventil ausgebildet.

Alternativ oder zusätzlich kann eine geregelte Speicherladepumpe 46 als Massenstromsteuerungseinheit 48 und Steuereinheit 60 vorgesehen sein.

Die Ladezuleitung 44 mündet am Vorlauf des ersten Wärmetauschers 26 in den Warmwasser-Zirkulationskreislauf 36. Das Speicherladesystem 42 umfasst ferner den ersten Wärmetauscher 26 und den Zulaufabschnitt des Warmwasser-Zirkulationskreislaufs 36 bis zur Verbindung mit dem Warmwasserspeicher 40.

Am oder im Warmwasserspeicher 40 sind ein mittlerer Speichersensor 52 sowie ein unterer Speichersensor 54 vorgesehen, die eine Temperatur des Wassers und einen Ladezustand des Warmwasserspeichers 40 erfassen.

Im Zirkulationskreislauf und im Speicherladekreislauf sind jeweils Rückflussverhinderer 56 angeordnet, die einen Rückfluss des Trinkwassers in den entsprechenden Leitungen verhindern.

Im Folgenden werden die Funktion der Warmwasserbereitungsanlage 10 und ein Verfahren zum Betreiben der Warmwasserbereitungsanlage 10 anhand der Figuren 1 bis 3 erläutert. Der Heizwasserkreislauf 12 versorgt das Wärmetauschersystem 16 mit Heizwasser, wobei die im Heizwasser gespeicherte Wärmeenergie im ersten und zweiten Wärmetauscher 26, 28 auf das Trinkwasser im Trinkwasserkreislauf 14 übertragen wird, um das Trinkwasser aufzuwärmen. Kaltes Trinkwasser fließt vom Trinkwasserzulauf 32 oder dem Warmwasserspeicher 40 durch das Speicherladesystem 42 (vgl. Figur 3) und wird im zweiten Wärmetauscher 28 in einem ersten Schritt vorgewärmt und im ersten Wärmetauscher 26 auf die gewünschte Endtemperatur aufgewärmt.

Es ist eine Warmwassersteuereinheit 58 vorgesehen, die die Trinkwassertemperatur im Zulaufabschnitt des Warmwasser-Zirkulationskreislaufs 36 auf einen Warmwassertemperatursollwert regelt. In der gezeigten Ausführungsform ist der Warmwassertemperatursollwert im Zulaufabschnitt 60 °C, wodurch einerseits die Temperatur ausreichend hoch ist, um Legionellen abzutöten und andererseits eine Verbrühungsgefahr durch heißes Wasser sowie verstärkte Kalkablagerungen bei hohen Temperaturen vermieden werden. Die Warmwassersteuereinheit 58 erfasst die Trinkwassertemperatur im Zulaufabschnitt des Warmwasser-Zirkulationskreislaufs 36 durch den Warmwassertemperatursensor 50 und regelt die Trinkwassertemperatur durch Steuerung der Mischeinheit 22 im Heizwasserkreislauf 12.

Bei der Zirkulation durch den Warmwasser-Zirkulationskreislauf 36 (vgl. Figur 2) verliert das Trinkwasser Wärmeenergie und hat somit im Rücklaufabschnitt eine geringere Temperatur als im Zulaufabschnitt. Die Energieverluste bei der Zirkulation durch den Warmwasser-Zirkulationskreislauf 36 werden durch den ersten Wärmetauscher 26 ausgeglichen.

Der Warmwasser-Zirkulationskreislauf 36 ist so ausgelegt, dass die Temperatur im Rücklaufabschnitt mindestens 55 °C beträgt. Da im ersten Wärmetauscher 26 das Trinkwasser im Warmwasser-Zirkulationskreislauf 36 von 55 °C auf 60 °C aufgewärmt wird, kann das Heizwasser im Heizwasserkreislauf 12 im ersten Wärmetauscher 26 maximal auf 55 °C abgekühlt werden.

Die im 55 °C warmen Heizwasser verbleibende Wärmeenergie wird im zweiten Wärmetauscher 28 genutzt, um das Trinkwasser im Speicherladesystem 42 zu erwärmen. Das Trinkwasser wird dabei im zweiten Wärmetauscher 28 von einer Temperatur von ca. 10 °C auf eine Temperatur von ca. 55 °C vorgewärmt. Das im zweiten Wärmetauscher 28 vorgewärmte Trinkwasser wird dann in den Rücklaufabschnitt des Warmwasser-Zirkulationskreislaufs 36 eingeleitet und wird im ersten Wärmetauscher 26 auf die Endtemperatur von 60 °C aufgewärmt.

Der Trinkwassermassenstrom durch das Speicherladesystem 42 fließt weiter über den Zulaufabschnitt des Warmwasser-Zirkulationskreislaufs 36 in den Warmwasserspeicher 40, der auf diese Weise von oben mit 60 °C warmem Trinkwasser geladen wird. Das Speicherladesystem 42 ist in Figur 3 mit dicken Linien hervorgehoben.

Im folgenden wird ein Normalbetriebsmodus beschrieben. Das warme Trinkwasser im Warmwasser-Zirkulationskreislauf 36 wird wie oben beschrieben durch den ersten Wärmetauscher 26 gepumpt, wobei die Temperatur des Trinkwassers im Warmwasser-Zirkulationskreislauf 36 nach Durchfluss des ersten Wärmetauschers 26 auf den Trinkwassertemperatursollwert von 60 °C geregelt wird.

Darüberhinaus wird die Heizwasserrückflusstemperatur des Heizwassers nach Durchfluss des gesamten Wärmetauschersystems 16 auf einen Heizwasserrückflusstemperatursollwert geregelt, indem der Massenstrom von Trinkwasser durch das Speicherladesystem 42 gesteuert wird. Im Normalbetriebsmodus beträgt der Heizwasserrückflusstemperatursollwert höchstens 50 °C.

Beispielsweise beträgt der Heizwasserrückflusstemperatursollwert genau 50 °C. Die Massenstromsteuerungseinheit 48 im Speicherladesystem 42 regelt den Massenstrom von Trinkwasser so, dass das Heizwasser im zweiten Wärmetauscher 28 von ca. 55 °C auf 50 °C abgekühlt wird, während das Trinkwasser von ca. 10 °C auf ca. 55 °C aufgewärmt wird. Für die Abkühlung des Heizwassers auf 50 °C wird daher nur ein geringer Massenstrom von Trinkwasser durch das Speicherladesystem 42 benötigt. Im Normalbetriebsmodus erfolgt auf diese Weise ein kontinuierliches Laden des Warmwasserspeichers 40 mit einem geringen Massenstrom.

Wird an der Trinkwasserzapfstelle 34 eine größere Menge Warmwasser entnommen als der Trinkwassermassenstrom durch das Speicherladesystem 42, so fließt Warmwasser aus dem Warmwasserspeicher 40 in den Warmwasser-Zirkulationskreislauf 36, und der Warmwasserspeicher 40 wird zumindest teilweise entladen. Die entnommene Warmwassermenge und der kontinuierliche geringe Massenstrom durch das Speicherladesystem können sich im zeitlichen Mittel ausgleichen.

Werden dem Warmwasserspeicher jedoch größere Mengen Warmwasser entnommen, so verändert sich die Temperaturverteilung des Wassers im Warmwasserspeicher 40. Im mittleren Bereich des Warmwasserspeichers 40 ist ein mittlerer Speichersensor 52 vorgesehen, welcher die Temperatur des Wassers im mittleren Speicherbereich erfasst. Wird der Warmwasserspeicher 40 entladen, so steigt der Bereich kalten Wassers im Warmwasserspeicher 40 nach oben und die Temperatur an der Position des mittleren Speichersensors 52 sinkt.

Die Steuereinheit 60, welche die Heizwasserrückflusstemperatur regelt, ist so ausgebildet, dass der Heizwasserrückflusstemperatursollwert in Abhängigkeit von der Temperatur des Wassers im Warmwasserspeicher 40 oder des Ladezustands des Warmwasserspeichers 40 ausgewählt wird. Bei einem ausreichend geladenem Warmwasserspeicher 40 wird der Heizwasserrückflusstemperatursollwert auf 50 °C gesetzt, während bei zunehmend entladenem Warmwasserspeicher 40 der Heizwasserrückflusstemperatursollwert zunehmend niedriger gesetzt wird bis zu 15 °C. Beispielsweise ist eine Kennlinie vorgesehen, welche der gemessenen Temperatur des mittleren Speichersensors 52 einen in Temperaturschritten oder stufenlos Heizwasserrückflusstemperatursollwert zuordnet.

Wird der Heizwasserrückflusstemperatursollwert gesenkt, so setzt die Massenstromsteuerungseinheit 48 den Massenstrom von Trinkwasser durch das Speicherladesystem 42 höher, um eine entsprechend stärkere Abkühlung des Heizwassers im zweiten Wärmetauscher 28 zu ermöglichen. Durch den erhöhten Massenstrom durch das Speicherladesystem 42 wird der Warmwasserspeicher 40 schneller aufgeladen.

Falls über längere Zeit kein Warmwasser an der Trinkwasserzapfstelle 34 entnommen wird, kann der Warmwasserspeicher 40 durch den kontinuierlichen Massenstrom durch das Speicherladesystem im Normalbetriebsmodus vollständig geladen werden, wobei der untere Speichersensor 54 am Warmwasserspeicher 40 einen entsprechenden Temperaturanstieg erfasst. In diesem Fall wird der Massenstrom des Trinkwassers durch das Speicherladesystem 42 auf Null gesetzt, wofür im gezeigten Ausführungsbeispiel die Speicherladepumpe 46 abgeschaltet wird.

Um ein Wachstum von Legionellen im Warmwasserspeicher 40 zu verhindern, wird der Warmwasserspeicher 40 in vorgegebenen Zeitintervallen vollständig aufgeheizt. Die Steuereinheit 60 setzt in diesem Fall den Heizwasserrückflusstemperatursollwert im vorgegebenen Zeitintervall herab, wodurch der Massenstrom durch das Speicherladesystem 42 erhöht wird und ein schnelles Laden des Warmwasserspeichers 40 erfolgt. Der Legionellenschutzbetrieb wird beispielsweise beendet, wenn die Wassertemperatur im Warmwasserspeicher 40 am unteren Speichersensor 54 50 °C beträgt, d.h. der Warmwasserspeicher 40 vollständig geladen ist.

Die angegebenen Temperaturwerte beziehen sich auf ein Ausführungsbeispiel. Es können auch andere Temperaturwerte, insbesondere für den Heizwasserrückflusstemperatursollwert und den Trinkwassertemperatursollwert, gewählt werden. Insbesondere können die Temperaturwerte an die Anforderungen des Fernwärmenetzes oder Empfehlungen oder gesetzliche Vorschriften angepasst werden.

In der gezeigten Ausführungsform ist vorgesehen, dass die Zirkulationspumpe 38 im Dauerbetrieb ist und somit eine ständige Zirkulation im Warmwasser-Zirkulationskreislauf 36 erfolgt. Es ist aber auch möglich, dass der Betrieb der Zirkulationspumpe 38 intervallartig erfolgt. Die Zirkulationspumpe 38 kann beispielsweise in der Nacht abgeschaltet werden oder auch in kurzen Intervallen betrieben werden, beispielsweise in einem 10-Minuten-Intervall mit anschließender 20-Minuten-Pause (10/20). In dem Zeitraum, in dem die Zirkulationspumpe 38 ausgeschaltet ist, kann der Massenstrom im Speicherladesystem 42 auf 0 gesetzt werden. In diesem Fall kann auch der Heizwasserkreislauf 12 gesperrt werden, indem beispielsweise die Wärmetauscherladepumpe 24 abgeschaltet wird.

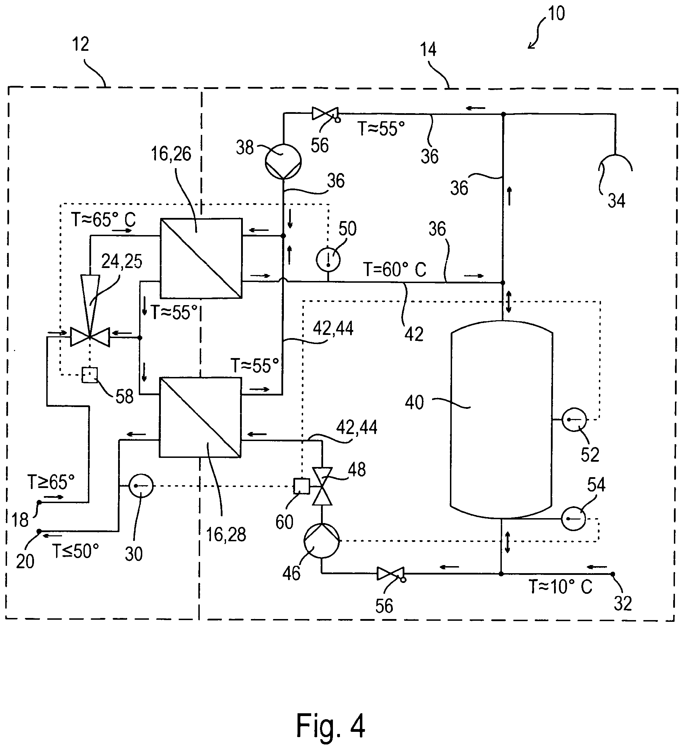

Figur 4 zeigt eine alternative Ausführungsform der Warmwasserbereitungsanlage 10, wobei im Heizwasserkreislauf 12 die Wärmetauscherladepumpe 24 als steuerbare Wasserstrahlpumpe 25 ausgebildet ist. Die Wasserstrahlpumpe 25 erfüllt darüber hinaus die Funktion der Mischeinheit 22.

Heizwasser des Heizwasserzulaufs 18 strömt mit hoher Geschwindigkeit durch eine Düse der Wasserstrahlpumpe 25, wodurch Wasser vom Rücklauf des ersten Wärmetauschers 26 angesaugt wird. Der Ausgang der Wasserstrahlpumpe 25 ist mit dem Vorlauf des ersten Wärmetauschers 26 verbunden. Die Wasserstrahlpumpe 25 pumpt somit eine Mischung des heißen Heizwassers des Heizwasserzulaufs 18 mit dem abgekühlten Heizwasser des Rücklaufs des ersten Wärmtauschers 26.

Weitere Komponenten der Warmwasserzubereitungsanlage 10 sowie deren Funktion sind identisch mit der in den Figuren 1 bis 3 gezeigten Ausführungsform.

## Patentansprüche

1. Warmwasserbereitungsanlage (10) mit einem primären Heizwasserkreislauf (12) und einem sekundären Trinkwasserkreislauf (14),
welcher über ein Wärmetauschersystem (16) mit dem Heizwasserkreislauf (12) gekoppelt ist und einen Warmwasser-Zirkulationskreislauf (36), einen außerhalb des Warmwasser-Zirkulationskreislaufs (36) angeordneten und mit dem Warmwasser-Zirkulationskreislauf (36) gekoppelten Warmwasserspeicher (40) und ein mit dem Wärmetauschersystem (16) verbundenes Speicherladesystem (42) umfasst,
wobei das Wärmetauschersystem (16) einen ersten Wärmetauscher (26), welcher einen Wärmeaustausch zwischen dem primären Heizwasserkreislauf (12) und dem Warmwasser-Zirkulationskreislauf (36) des Trinkwasserkreislauf (14) ermöglicht, und einen zweiten Wärmetauscher (28) umfasst, welcher im Heizwasserkreislauf (12) im Rücklauf des ersten Wärmetauschers (26) und im Speicherladesystem (42) des Trinkwasserkreislaufs (14) im Vorlauf des ersten Wärmetauschers (26) angeordnet ist und einen Wärmeaustausch zwischen dem primären Heizwasserkreislauf (12) und einer Ladezuleitung (44) des Warmwasser-Zirkulationskreislaufs (36) des Trinkwasserkreislaufs (14) ermöglicht,
wobei eine Steuereinheit (60) vorgesehen ist, die im Heizwasserkreislauf (12) einen Heizwassertemperatursensor (30) im Rücklauf des zweiten Wärmetauschers (28) und eine Massenstromsteuerungseinheit (48) im Speicherladesystem umfasst, **dadurch gekennzeichnet, dass** die Steuereinheit eine Regelung der Heizwasserrücklauftemperatur im Rücklauf des zweiten Wärmetauschers (28) durch Steuerung des Massenstroms von Trinkwasser durch den zweiten Wärmetauscher (28) im Trinkwasserkreislauf (14) ermöglicht.

2. Warmwasserbereitungsanlage nach Anspruch 1, **dadurch gekennzeichnet, dass** die Massenstromsteuerungseinheit (48) im Speicherladesystem (42) ein Stromregelventil ist.

3. Warmwasserbereitungsanlage nach Anspruch 1 oder 2, **dadurch gekennzeichnet, dass** im Heizwasserkreislauf (12) eine Mischeinheit (22) vorgesehen ist, welche mit einem ersten Eingang mit einem Heizwasserzulauf (18), mit einem zweiten Eingang mit dem Rücklauf des ersten Wärmetauschers (26) und mit einem Ausgang mit dem Vorlauf des ersten Wärmetauschers (26) verbunden ist.

4. Warmwasserbereitungsanlage nach Anspruch 3, **dadurch gekennzeichnet, dass** eine Warmwassersteuereinheit (58) mit einem Warmwassertemperatursensor (50) vorgesehen ist, welche eine Regelung der Trinkwassertemperatur im Warmwasser-Zirkulationskreislauf (36) nach dem Wärmetauschersystem (16) durch Steuerung der Mischeinheit (22) im Heizwasserkreislauf (12) ermöglicht.

5. Warmwasserbereitungsanlage nach einem der vorhergehenden Ansprüche, **dadurch gekennzeichnet, dass** eine Speicherladepumpe (46), vorzugsweise eine Hocheffizienzpumpe, im Speicherladesystem (42) vorgesehen ist.

6. Warmwasserbereitungsanlage nach einem der vorhergehenden Ansprüche, **dadurch gekennzeichnet, dass** zumindest ein Speichersensor (52, 54) am Warmwasserspeicher (40) vorgesehen ist, der eine Temperatur des Wassers im Warmwasserspeicher (40) erfasst.

7. Warmwasserbereitungsanlage nach einem der vorhergehenden Ansprüche, **dadurch gekennzeichnet, dass** der erste und der zweite Wärmetauscher (26, 28) in einem gemeinsamen Wärmetauscher integriert sind.

8. Verfahren zum Betreiben einer Warmwasserbereitungsanlage (10) mit einem primären Heizwasserkreislauf (12) und einem sekundären Trinkwasserkreislauf (14), welcher über ein Wärmetauschersystem (16) mit dem Heizwasserkreislauf (12) gekoppelt ist, und einen Warmwasser-Zirkulationskreislauf (36), einen außerhalb des Warmwasser-Zirkulationskreislaufs (36) angeordneten und mit dem Warmwasser-Zirkulationskreislauf gekoppelten Warmwasserspeicher (40) und ein mit dem Wärmetauschersystem (16) verbundenes Speicherladesystem (42) umfasst, wobei ein Betriebsmodus vorgesehen ist, mit dem Verfahrschritt:
- Pumpen des erwärmten Trinkwassers im Warmwasser-Zirkulationskreislauf (36) durch das Wärmetauschersystem (16);
das Verfahren wird durch folgende Verfahrenschritte gekennzeichnet:
- Regeln einer Trinkwassertemperatur im Warmwasser-Zirkulationskreislauf (36) nach Durchfluss des Wärmetauschersystems (16) auf einen Trinkwassertemperatursollwert durch Steuerung des Heizwasserzuflusses des Wärmetauschersystems (16);
- Regeln einer Heizwasserrückflusstemperatur des Heizwassers nach Durchfluss des Wärmetauschersystems (16) auf einen Heizwasserrückflusstemperatursollwert durch Steuerung des Massenstroms von Trinkwasser durch das Speicherladesystem (42).

9. Verfahren nach Anspruch 8, **dadurch gekennzeichnet, dass** der Heizwasserzufluss des Wärmetauschersystems (16) über die Temperatur und/oder den Massenstrom des Heizwassers gesteuert wird.

10. Verfahren nach Anspruch 8 oder 9, **dadurch gekennzeichnet, dass** der Trinkwassertemperatursollwert im Warmwasser-Zirkulationskreislauf (36) nach Durchfluss des Wärmetauschersystems (16) mindestens 60 °C, vorzugsweise zwischen 60 °C und 65 °C beträgt.

11. Verfahren nach einem der vorhergehenden Ansprüche, **dadurch gekennzeichnet, dass** der Heizwasserrückflusstemperatursollwert höchstens 50 °C beträgt.

12. Verfahren nach einem der vorhergehenden Ansprüche, **dadurch gekennzeichnet, dass** ein Normalbetrieb vorgesehen ist, bei dem der Warmwasserspeicher (40) kontinuierlich mit einem Massenstrom von Trinkwasser durch das Speicherladesystem (42) geladen wird.

13. Verfahren nach einem der vorhergehenden Ansprüche, **dadurch gekennzeichnet, dass** ein Volllastbetrieb vorgesehen ist, bei dem der Warmwasserspeicher (40) mit einem maximalen Massenstrom von Trinkwasser durch das Speicherladesystem (42) geladen wird.

14. Verfahren nach einem der vorhergehenden Ansprüche, **dadurch gekennzeichnet, dass** der Heizwasserrückflusstemperatursollwert in Abhängigkeit von der Temperatur des Wassers im Warmwasserspeicher (40) und/oder des Ladezustands des Warmwasserspeichers (40) ausgewählt wird.

15. Verfahren nach einem der vorhergehenden Ansprüche, **dadurch gekennzeichnet, dass** bei vollständig geladenem Warmwasserspeicher (40) der Massenstrom des Trinkwassers durch das Speicherladesystem (42) auf Null gesetzt wird.

## Claims

1. A hot water producing system (10) comprising a primary heating water circuit (12) and a secondary drinking water circuit (14),
which is coupled to the heating water circuit (12) via a heat exchanger system (16) and comprises a hot water circulation circuit (36), a hot water storage tank (40) arranged outside the hot water circulation circuit (36) and coupled to the hot water circulation circuit (36), and a storage tank charging system (42) connected to the heat exchanger system (16),
the heat exchanger system (16) comprising a first heat exchanger (26) which allows a heat exchange between the primary heating water circuit (12) and the hot water circulation circuit (36) of the drinking water circuit (14), and a second heat exchanger (28) which is arranged in the heating water circuit (12) in the return flow of the first heat exchanger (26) and in the storage tank charging system (42) of the drinking water circuit (14) in the supply flow of the first heat exchanger (26) and allows a heat exchange between the primary heating water circuit (12) and a charging feed pipe (44) of the hot water circulation circuit (36) of the drinking water circuit (14),
a control unit (60) being provided, which comprises a heating water temperature sensor (30) in the return flow of the second heat exchanger (28) in the heating water circuit (12) and a mass flow control unit (48) in the storage tank charging system, **characterized in that** the control unit allows a closed-loop control of the heating water return flow temperature in the return flow of the second heat exchanger (28) by controlling the mass flow of drinking water through the second heat exchanger (28) in the drinking water circuit (14).

2. The hot water producing system according to claim 1, **characterized in that** the mass flow control unit (48) in the storage tank charging system (42) is a flow control valve.

3. The hot water producing system according to claim 1 or 2, **characterized in that** provided in the heating water circuit (12) is a mixing unit (22) which has a first inlet connected to a heating water inflow (18), a second inlet connected to the return flow of the first heat exchanger (26), and an outlet connected to the supply flow of the first heat exchanger (26).

4. The hot water producing system according to claim 3, **characterized in that** a hot water control unit (58) is provided which has a hot water temperature sensor (50) and allows a closed-loop control of the drinking water temperature in the hot water circulation circuit (36) downstream of the heat exchanger system (16) by controlling the mixing unit (22) in the heating water circuit (12).

5. The hot water producing system according to any of the preceding claims, **characterized in that** a storage tank charging pump (46), preferably a high-efficiency pump, is provided in the storage tank charging system (42).

6. The hot water producing system according to any of the preceding claims, **characterized in that** at least one storage tank sensor (52, 54) is provided at the hot water storage tank (40), which senses a temperature of the water in the hot water storage tank (40).

7. The hot water producing system according to any of the preceding claims, **characterized in that** the first and second heat exchangers (26, 28) are integrated in a joint heat exchanger.

8. A method of operating a hot water producing system (10) comprising a primary heating water circuit (12) and a secondary drinking water circuit (14), which is coupled to the heating water circuit (12) via a heat exchanger system (16) and comprises a hot water circulation circuit (36), a hot water storage tank (40) arranged outside the hot water circulation circuit (36) and coupled to the hot water circulation circuit, and a storage tank charging system (42) connected to the heat exchanger system (16), an operating mode being provided, including the method step of:
- pumping the heated drinking water in the hot water circulation circuit (36) through the heat exchanger system (16);
the method being **characterized by** the following method steps:
- closed-loop controlling a drinking water temperature within the hot water circulation circuit (36) after passage through the heat exchanger system (16) to a drinking water temperature set-point by controlling the heating water inflow of the heat exchanger system (16);
- closed-loop controlling a heating water return flow temperature of the heating water after passage through the heat exchanger system (16) to a heating water return flow temperature set-point by controlling the mass flow of drinking water through the storage tank charging system (42).

9. The method according to claim 8, **characterized in that** the heating water inflow of the heat exchanger system (16) is controlled on the basis of the temperature and/or the mass flow of the heating water.

10. The method according to claim 8 or 9, **characterized in that** the drinking water temperature set-point in the hot water circulation circuit (36) after passage through the heat exchanger system (16) is at least 60°C, preferably between 60°C and 65°C.

11. The method according to any of the preceding claims, **characterized in that** the heating water return flow temperature set-point is at most 50°C.

12. The method according to any of the preceding claims, **characterized in that** a normal operation is provided, in which the hot water storage tank (40) is continuously charged with a mass flow of drinking water through the storage tank charging system (42).

13. The method according to any of the preceding claims, **characterized in that** a full-load operation is provided, in which the hot water storage tank (40) is charged with a maximum mass flow of drinking water through the storage tank charging system (42).

14. The method according to any of the preceding claims, **characterized in that** the heating water return flow temperature set-point is selected as a function of the temperature of the water in the hot water storage tank (40) and/or the charge state of the hot water storage tank (40).

15. The method according to any of the preceding claims, **characterized in that** when the hot water storage tank (40) is in the fully charged state, the mass flow of the drinking water through the storage tank charging system (42) is set to zero.

## Revendications

1. Installation de préparation d'eau chaude (10), comprenant un circuit d'eau de chauffage primaire (12) et un circuit d'eau potable secondaire (14)
lequel est couplé au circuit d'eau de chauffage (12) par l'intermédiaire d'un système d'échangeur thermique (16) et comprend un circuit de circulation d'eau chaude (36), un accumulateur d'eau chaude (40) agencé à l'extérieur du circuit de circulation d'eau chaude (36) et couplé au circuit de circulation d'eau chaude (36), et un système de charge d'accumulateur (42) relié au système d'échangeur thermique (16),
le système d'échangeur thermique (16) comprenant un premier échangeur thermique (26) qui permet un échange de chaleur entre le circuit d'eau de chauffage primaire (12) et le circuit de circulation d'eau chaude (36) du circuit d'eau potable (14), et un deuxième échangeur thermique (28) qui est agencé dans le circuit d'eau de chauffage (12) dans le retour du premier échangeur thermique (26) et dans le système de charge d'accumulateur (42) du circuit d'eau potable (14) dans l'arrivée du premier échangeur thermique (26), et qui permet un échange de chaleur entre le circuit d'eau de chauffage primaire (12) et une conduite d'alimentation de charge (44) du circuit de circulation d'eau chaude (36) du circuit d'eau potable (14),
une unité de commande (60) étant prévue, laquelle comprend dans le circuit d'eau de chauffage (12) un capteur de température d'eau de chauffage (30) dans le retour du deuxième échangeur thermique (28) et une unité de commande de flux massique (48) dans le système de charge d'accumulateur, **caractérisée en ce que** l'unité de commande permet un réglage de la température de retour de l'eau de chauffage dans le retour du deuxième échangeur thermique (28) par la commande du flux massique d'eau potable à travers le deuxième échangeur thermique (28) dans le circuit d'eau potable (14).

2. Installation de préparation d'eau chaude selon la revendication 1, **caractérisée en ce que** l'unité de commande de flux massique (48) dans le système de charge d'accumulateur (42) est une vanne de régulation de flux.

3. Installation de préparation d'eau chaude selon la revendication 1 ou 2, **caractérisée en ce qu'**une unité de mélange (22) est prévue dans le circuit d'eau de chauffage (12), dont une première entrée est raccordée à une arrivée d'eau de chauffage (18), une deuxième entrée est raccordée au retour du premier échangeur thermique (26), et une sortie est raccordée à l'amenée du premier échangeur thermique (26).

4. Installation de préparation d'eau chaude selon la revendication 3, **caractérisée en ce qu'**il est prévu une unité de commande d'eau chaude (58) qui présente un capteur de température d'eau chaude (50) et qui permet un réglage de la température de l'eau potable dans le circuit de circulation d'eau chaude (36) en aval du système d'échangeur thermique (16) par la commande de l'unité de mélange (22) dans le circuit d'eau de chauffage (12).

5. Installation de préparation d'eau chaude selon l'une des revendications précédentes, **caractérisée en ce qu'**il est prévu une pompe de charge d'accumulateur (46), de préférence une pompe à haut rendement dans le système de charge d'accumulateur (42).

6. Installation de préparation d'eau chaude selon l'une des revendications précédentes, **caractérisée en ce qu'**il est prévu au moins un capteur d'accumulateur (52, 54) sur l'accumulateur d'eau chaude (40), lequel saisit une température de l'eau dans l'accumulateur d'eau chaude (40).

7. Installation de préparation d'eau chaude selon l'une des revendications précédentes, **caractérisée en ce que** le premier et le deuxième échangeur thermique (26, 28) sont intégrés dans un échangeur thermique commun.

8. Procédé de mise en oeuvre d'une installation de préparation d'eau chaude (10), comprenant un circuit d'eau de chauffage primaire (12) et un circuit d'eau potable secondaire (14) lequel est couplé au circuit d'eau de chauffage (12) par l'intermédiaire d'un système d'échangeur thermique (16) et comprend un circuit de circulation d'eau chaude (36), un accumulateur d'eau chaude (40) agencé à l'extérieur du circuit de circulation d'eau chaude (36) et couplé au circuit de circulation d'eau chaude, et un système de charge d'accumulateur (42) relié au système d'échangeur thermique (16), un mode de fonctionnement étant prévu, lequel comprend l'étape de procédé suivante :
- le pompage de l'eau potable chauffée dans le circuit de circulation d'eau chaude (36) à travers le système d'échangeur thermique (16) ;
le procédé étant **caractérisé par** les étapes de procédé suivantes :
- le réglage d'une température d'eau potable dans le circuit de circulation d'eau chaude (36) après le passage à travers le système d'échangeur thermique (16) à une valeur de consigne de température d'eau potable par la commande de l'arrivée d'eau de chauffage du système d'échangeur thermique (16) ;
- le réglage d'une température de reflux d'eau de chauffage de l'eau de chauffage après le passage à travers le système d'échangeur thermique (16) à une valeur de consigne de température de reflux d'eau de chauffage par la commande du flux massique d'eau potable à travers le système de charge d'accumulateur (42).

9. Procédé selon la revendication 8, **caractérisé en ce que** l'arrivée d'eau de chauffage du système d'échangeur thermique (16) est commandée sur la base de la température et/ou du flux massique de l'eau de chauffage.

10. Procédé selon la revendication 8 ou 9, **caractérisé en ce que** la valeur de consigne de la température d'eau potable dans le circuit de circulation d'eau chaude (36) après le passage à travers le système d'échangeur thermique (16) est d'au moins 60°C et est de préférence comprise entre 60°C et 65°C.

11. Procédé selon l'une des revendications précédentes, **caractérisé en ce que** la valeur de consigne de la température du reflux d'eau de chauffage est de 50°C au maximum.

12. Procédé selon l'une des revendications précédentes, **caractérisé en ce qu'**il est prévu un fonctionnement normal dans lequel l'accumulateur d'eau chaude (40) est continuellement chargé avec un flux massique d'eau potable à travers le système de charge d'accumulateur (42).

13. Procédé selon l'une des revendications précédentes, **caractérisé en ce qu'**il est prévu un fonctionnement à pleine charge dans lequel l'accumulateur d'eau chaude (40) est chargé avec un flux massique maximal d'eau potable à travers le système de charge d'accumulateur (42).

14. Procédé selon l'une des revendications précédentes, **caractérisé en ce que** la valeur de consigne de la température de reflux d'eau de chauffage est choisie en fonction de la température de l'eau dans l'accumulateur d'eau chaude (40) et/ou de l'état de charge de l'accumulateur d'eau chaude (40).

15. Procédé selon l'une des revendications précédentes, **caractérisé en ce que** le flux massique de l'eau potable à travers le système de charge d'accumulateur (42) est mis à zéro lorsque l'accumulateur d'eau chaude (40) est entièrement chargé.
